# EUROPEAN PATENT SPECIFICATION

(11) **EP 0 570 183 B1**
(45) Date of publication and mention of the grant of the patent: **06.12.1995**
(21) Application number: 93303606.3
(22) Date of filing: 10.05.1993
(51) Int. Cl.: B60R 13/01

(54) **A load compartment liner**
Ladeflächenschutzeinlage
Revêtement pour surface de chargement

(30) Priority: 14.05.1992 GB 9210506
(43) Date of publication of application: 18.11.1993
(73) Proprietor: FORD MOTOR COMPANY LIMITED, Brentwood Essex (GB); FORD FRANCE S. A., 92506 Rueil-Malmaison Cédex (FR); FORD-WERKE AKTIENGESELLSCHAFT, 50725 Köln (DE)
(72) Inventor: Blake, Roy William, Hockley, Essex SS5 4SL (GB)
(74) Representative: Messulam, Alec Moses

(56) References cited:
- EP-A- 0 077 215
- US-A- 4 333 678
- US-A- 5 046 775

## Description

This invention relates to a load compartment liner for providing a lining to the load space of a motor vehicle.

Load compartment liners are known, for example, from GB-A-2 111 438. Such liners are conventionally used to prevent dirty cargoes from permanently soiling the vehicle load space. For this purpose it is important that the liner be continuous and that there should not be the possibility that the cargo can penetrate through the liner into the vehicle.

Because of the inherent size of vehicle load spaces, it can be difficult to form in one piece a liner for larger load spaces. Furthermore if the liner is in one piece, then it has to be inserted in the vehicle in one piece and as a result the useable interior volume of the load space with the liner in place may be compromised.

A load compartment liner is also known from US-A-4 333 678. This liner has initially separate floor and wall panels which are secured together by piercing the panels and passing threaded fasteners through them. This leads to potential leakage sites through which water can pass, and makes assembly/disassembly time consuming.

According to the present invention, there is provided a load compartment liner for the load space of a motor vehicle, the liner comprising a floor panel with upstands around the edges of the panel and wall panels separate from the floor panel and connected to the upstands, characterised in that the upstands support brackets adapted to receive the lower edges of the wall panels, so that the lower edges of the wall panels extend below the upper edges of the upstands.

The brackets are preferably U-shaped.

With a liner as set forth above the floor panel can be introduced into the vehicle and then the wall panels can be attached to the floor panel from within the vehicle. Because the wall and floor panels are manufactured separately, manufacturing problems are less than would be encountered if it were to be necessary to manufacture the whole liner in one operation. Furthermore by connecting the wall panels to the floor panel from within the load space, it becomes possible to enclose an optimum amount of load space within the liner. The use of brackets to support the wall panels on the floor panel avoids the need to pierce the panels.

The U-shaped brackets preferably include inwardly and downwardly directed tangs which will allow the lower edges of the wall panels to be pushed into the brackets but which will resist removal of the panels.

The outside faces of the wall panels preferably have a rib which stands proud of the plane of the wall panel and is located above the lower edge of the wall panel, and parallel thereto, and below the upper edge of the upstands. The U-shape of the supporting brackets are arranged to support the lower edge of the wall panels away from the upstand, with a rib on the wall panels in contact with the upstand.

The upstands preferably have apertures formed through the walls thereof, the apertures serving to retain the support brackets and being obscured, in use, by the ribs on the wall panels.

The floor and wall panels are preferably vacuum formed from sheet plastics materials. The wall panels can include wheel arch cover panels, and the wall panels can be secured to the walls of the motor vehicle load space by means of conventional push-in fasteners.

The wall panels can also incorporate stowage bins.

The invention will now be further described, by way of example, with reference to the accompanying drawings, in which:
Figure 1 is a schematic view of the rear of a van incorporating a load compartment liner in accordance with the invention;
Figure 2 is an exploded view showing the components of a liner in accordance with the invention; and
Figure 3 is a detail view showing the connection between a wall panel and the floor panel.

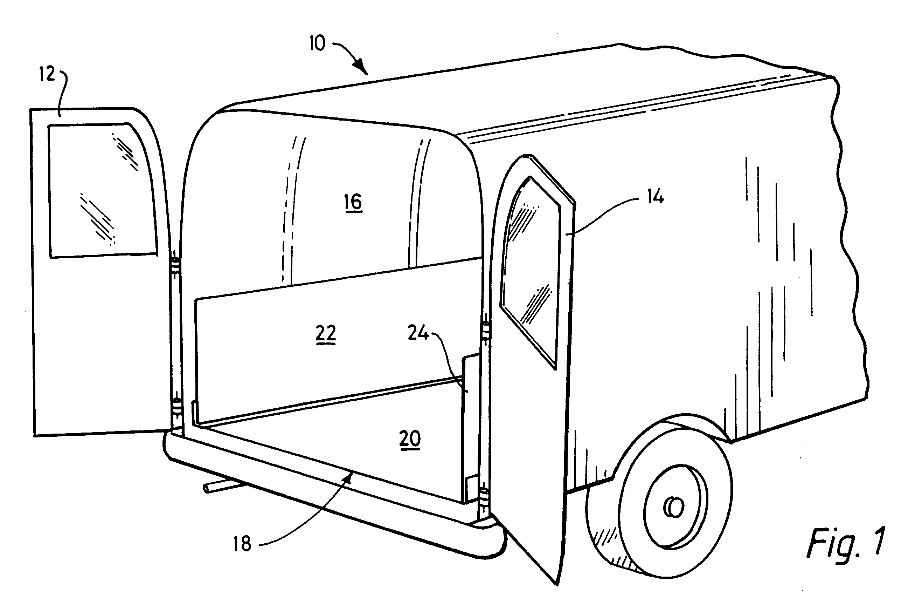

Figure 1 shows a van 10 with load doors 12 and 14 shown in the open position. Inside the load space 16 is a load compartment liner 18 which has a floor panel 20 and wall panels 22, 24.

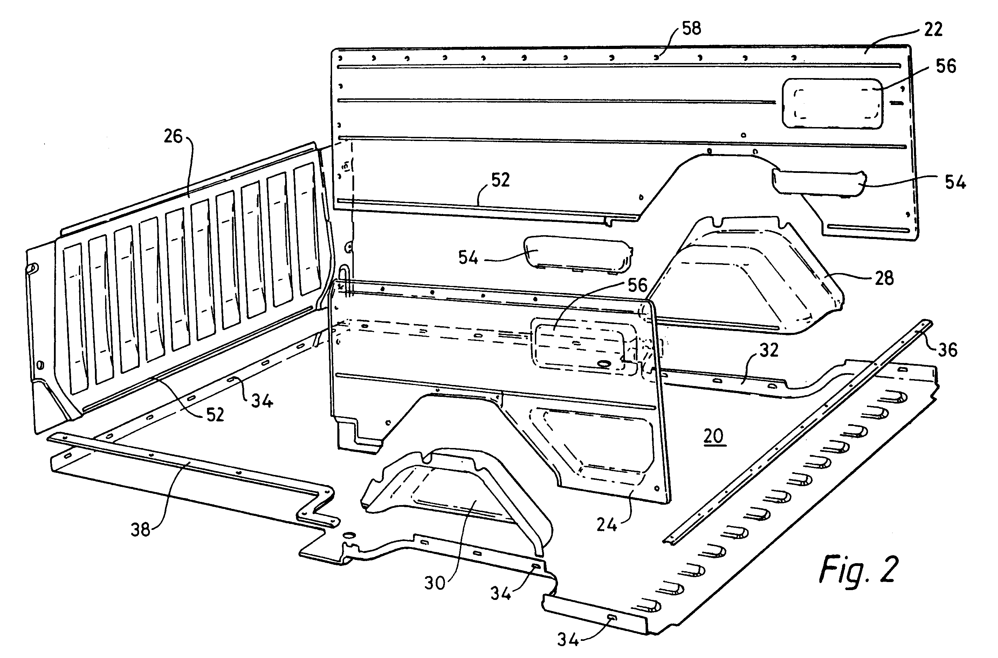

Figure 2 shows the construction of the liner 18 in more detail. The liner comprises the floor panel 20, a full side wall panel 22, a part side wall panel 24 and a front wall panel 26. Wheel arch cover panels 28 and 30 are also provided.

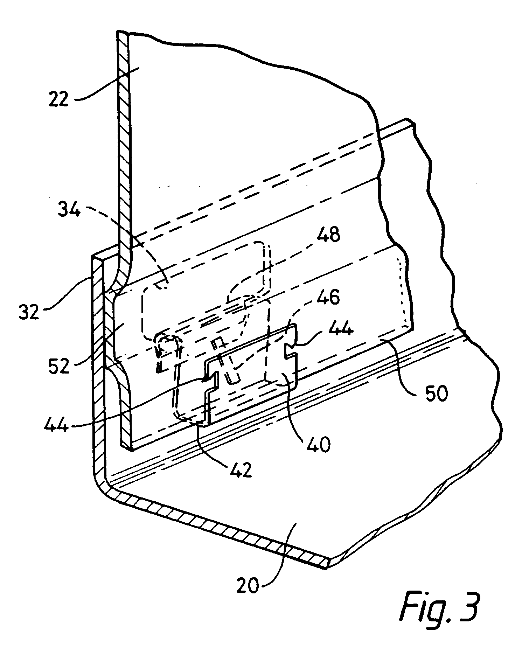

The floor panel 20 has an upstand 32 extending around all those edges to which a wall panel is to be connected. The upstands 32 have slots 34 for receiving support brackets as shown in Figure 3.

The configuration as shown in Figure 2 is for a van which has a rear loading door and a side loading door. At the positions of the loading doors the floor panel 20 will be secured by sealing strips 36, 38 which are fastened through the floor panel 20 to the bodywork of the vehicle.

Figure 3 shows a support bracket 40 which is retained in one of the slots 34 around the upstand 32. The bracket has a U-shaped portion 42 for receiving the edge of the wall panel 22 and has two tangs 44 extending from one face of the U-shape, and a single tang 46 extending from the other face. The construction of the tang 46 is such that the panel 22 is forced against the front face of the U section 42. The rear face ends in a hook portion 48 which hooks into the edge of the slot 34. The dimensions of the bracket are such that when the wall panel 22 is in place, the lower edge 50 of the panel is spaced from the upstand 32. The wall panel however has a longitudinal rib 52 which extends the length of the rib and abuts the upstand 32 when the wall is in position. The rib 52 also covers over the slot 34.

The construction of the joint between the floor panel 20 and the wall panel 22 in this way results in an adequately waterproof joint between the floor and the walls. Between the floor 20 and the upstand 32, there is a continuous unbroken surface. Because the lower part of the wall 22 is supported slightly above and spaced from the upstand, there is no chance of water being drawn through the gap between the upstand and the wall panel by capillary action. The construction of the rib 52 to obscure the aperture 34 also substantially hinders the passage of water from within the liner 18 for the outside.

Figure 2 also shows storage bins 54 which are connected into recesses 56 by means of tab and slot connections.

The wall panels 22, 24, 26 are secured to the vehicle sides by means of snap fit fasteners which pass through holes 58 in the wall panels and into corresponding holes in the vehicle side members.

The floor and wall panels can conveniently be manufactured by vacuum forming of 3mm thick PVC or polypropylene sheet.

The liner described here is resistant to water penetration out of the load space and into the interior of the vehicle, as a result of the particular nature of the joints between the floor panel and wall panels. In particular, these joints will allow the liner to be washed out without water penetrating into the vehicle interior.

The liner is particularly useful for vans which have an interior part of which forms a load space and part of which forms driver/passenger accommodation.

## Claims

1. A load compartment liner for the load space of a motor vehicle, the liner comprising a floor panel (20) with upstands (32) around the edges of the panel and wall panels (22) separate from the floor panel and connected to the upstands, characterised in that the upstands (32) support brackets (40) adapted to receive the lower edges of the wall panels (22), so that the lower edges of the wall panels extend below the upper edges of the upstands (32).

2. A load compartment liner as claimed in Claim 1, wherein the brackets (40) are U-shaped.

3. A load compartment liner as claimed in Claim 2, wherein the U-shaped brackets (40) include inwardly and downwardly directed tangs (44, 46) which allow the lower edges of the wall panels (22) to be pushed into the brackets (40) but which resist removal of the panels (22).

4. A load compartment liner as claimed in Claim 2, or Claim 3, wherein the U-shapes of the supporting brackets (40) are arranged to support the lower edges of the wall panels (22) away from the upstand (32), with a rib (52) on the wall panels in contact with the upstand.

5. A load compartment liner as claimed in any preceding claim, wherein the floor and wall panels (20, 22) are vacuum formed from sheet plastics materials.

6. A load compartment liner as claimed in any preceding claim, wherein the wall panels (22) include wheel arch cover panels (30).

7. A load compartment liner as claimed in any preceding claim, wherein the wall panels (22) can be secured to the walls of the motor vehicle load space by means of conventional push-in fasteners.

8. A load compartment liner as claimed in any preceding claim, wherein the wall panels (22) incorporate stowage bins (54, 56).

## Patentansprüche

1. Laderaumauskleidung für den Laderaum eines Kraftfahrzeuges, wobei die Auskleidung eine Bodenplatte (20) mit entlang der Ränder der Platte hochstehenden Flanschen (32) aufweist, sowie von der Bodenplatte getrennte und mit den hochstehenden Flanschen verbundene Wandplatten (22),
dadurch gekennzeichnet, daß die hochstehenden Flansche (32) Klammern (40) tragen, die dazu bestimmt sind, die unteren Ränder der Wandplatten (22) aufzunehmen, so daß die unteren Kanten der Wandplatten sich bis unterhalb der Oberkante der hochstehenden Flansche (32) erstrecken.

2. Laderaumauskleidung nach Anspruch 1, in welchem die Klammern (40) U-förmig sind.

3. Laderaumauskleidung nach Anspruch 2, worin die U förmigen Klammern (40) nach innen und abwärts weisende Zungen (44, 46) aufweisen, die ein Einschieben der unteren Ränder der Wandplatten (22) in die Klammern zulassen, jedoch einem Herausziehen der Platten Widerstand entgegensetzen.

4. Laderaumauskleidung nach Anspruch 2 oder Anspruch 3, worin die U-Form der Halteklammern (40) so ausgebildet ist, daß diese die unteren Ränder der Wandplatten (22) im Abstand von dem hochstehenden Flansch (32) tragen, wobei eine Sicke (52) in den Wandplatten an dem hochstehenden Flansch anliegt.

5. Laderaumauskleidung nach einem beliebigen der vorangehenden Ansprüche, worin die Boden- und Wandplatten (20, 22) durch Tiefziehen aus Kunststoffplatten hergestellt werden.

6. Laderaumauskleidung nach einem beliebigen der vorangehenden Ansprüche, worin die Wandplatten (22) Radkasten-Verkleidungsplatten (30) aufweisen.

7. Laderaumauskleidung nach einem beliebigen der vorangehenden Ansprüche, worin die Wandplatten (22) mittels herkömmlicher Einsteck-Verbinder an den Wänden des Laderaumes des Kraftfahrzeuges befestigt werden können.

8. Laderaumauskleidung nach einem beliebigen der vorangehenden Ansprüche, worin die Wandplatten (22) Staufächer (54, 56) aufweisen.

## Revendications

1. Chemisage pour compartiment de chargement pour l'espace de chargement d'un véhicule à moteur, le chemisage comprenant un panneau de plancher (20) ayant des bordures (32) autour des arêtes du panneau et des panneaux de cloison (22) séparés du panneau de plancher et reliés aux bordures, caractérisé en ce que les bordures (32) supportent des pattes (40) destinées à recevoir les arêtes inférieures des panneaux de cloison (22), de sorte que les arêtes inférieures des panneaux de cloison s'étendent sous les arêtes supérieures des bordures (32).

2. Chemisage pour compartiment de chargement selon la revendication 1, dans lequel les pattes (40) ont une forme en U.

3. Chemisage pour compartiment de chargement selon la revendication 2, dans lequel les pattes (40) en forme de U incluent des languettes dirigées vers l'intérieur et vers le bas (44, 46) qui permettent aux arêtes inférieures des panneaux de cloison (22) d'être poussées conte les pattes (40) mais qui résistent au retrait des panneaux (22).

4. Chemisage pour compartiment de chargement selon la revendication 2 ou 3, dans lequel les formes en U des pattes de support (40) sont destinées à maintenir les arêtes inférieures des panneaux de cloison (22) éloignées de la bordure (32), une nervure (52) sur les panneaux de cloison étant en contact avec la bordure.

5. Chemisage pour compartiment de chargement selon l'une des revendications précédentes, dans lequel les panneaux de plancher et de cloison (20, 22) sont formés par aspiration sous vide à partir d'une matière plastique en feuilles.

6. Chemisage pour compartiment de chargement selon l'une des revendications précédentes, dans lequel les panneaux de cloison (22) incluent des panneaux de recouvrement en voûte (30).

7. Chemisage pour compartiment de chargement selon l'une des revendications précédentes, dans lequel les panneaux de cloison (22) peuvent être fixés aux cloisons de l'espace de chargement du véhicule à moteur au moyen d'attaches à emmancher traditionnelles.

8. Chemisage pour compartiment de chargement selon l'une des revendications précédentes, dans lequel les panneaux de cloison (22) incluent des évidements d'arrimage (54, 56).
